# EUROPÄISCHE PATENTSCHRIFT

(11) **EP 0 703 169 B1**
(45) Veröffentlichungstag und Bekanntmachung des Hinweises auf die Patenterteilung: **22.08.2001**
(21) Anmeldenummer: 95114451.8
(22) Anmeldetag: 14.09.1995
(51) Int. Cl.: B65G 53/42

(54) **Anlage zur Ausschleusung von Feinstäuben oder dgl.**
Installation for transferring fine powders
Installation pour écluser des poussières fines

(30) Priorität: 16.09.1994 DE 4432994
(43) Veröffentlichungstag der Anmeldung: 27.03.1996
(73) Patentinhaber: Krischik, Gerd, 59077 Hamm (DE)
(72) Erfinder: Krischik, Gerd, 59077 Hamm (DE)
(74) Vertreter: Möbus, Steffen

(56) Entgegenhaltungen:
- EP-A- 0 366 104
- DE-A- 4 134 652
- DE-A- 4 225 482

## Beschreibung

Die vorliegende Erfindung betrifft eine Anlage zur Ausschleusung von Feinstäuben oder dgl. gemäß Oberbegriff von Anspruch 1.

Aus DE 42 25 482 A1 ist eine Vorrichtung zum Ausschleusen von Feststoffen aus einem Raum erhöhten Druckes in einen Raum niedrigen Druckes bekannt, bei der zwischen zwei Anschlußstuzten und ein Drosselorgan vorgesehen ist, an dessen Austrittsseite ein gegenüber dem Querschnitt des Anschlußstutzens geringerer Drosselquerschnitt einstellbar ist.

Durch eine Freigabe des in der Größe veränderlichen Drosselquerschnittes und durch den hohen Druckgradienten wird in dem Drosselquerschnitt durch eine aktive Drucksteuerung eine intensive Entspannung des Lückengases herbeigeführt.

Die offenbarten Drosselorgane führen nicht zu einer kontinuierlichen Entspannung, sondern allenfalls kontinuierlich zu einer intensiven Entspannung, mit der Folge, daß es in dem in Strömungsrichtung hinter dem Drosselquerschnitt liegenden, unkontrollierten Bereich zu verwirbelten Strömungen kommt, die nicht zuletzt aufgrund der in dem Transportgas enthaltenen Partikel zu einer starken Erosion der umgebenden Bauteile führen. Die Feststoffpartikel wirken als Abrasivmittel, so daß die intensive Entspannung in den beschriebenen Fällen sehr schnell entweder zu dramatischen Schäden im Anschlußstutzen oder, bei Verwendung eines Drosselkegels, zu einer nahezu vollständigen Abrasion desselben führt. Die Lebensdauer eines solchen Drosselorganes ist demnach ausgesprochen kurz.

Aus DE 41 34 652 A1 ist ein Aggregatsatz für die aktive Druck- und Mengenstrom-Steuerung eines fluiden Mediums bekannt, in welchem zwei diffusorartige Querschnittserweiterungen im Strömungsweg ausgebildet sind. Diese diffusorartigen Querschnittserweiterungen führen zwar zu einer Drukkentlastung aber nicht zu einer verwirbelungsfreien Drukkentlastung. Zwar sollen "kritische Strömungen" bei Überwindung hoher Druckdifferenzen durch geeignete Einstellung der Drosselorgane unterdrückt werden können, dennoch erfolgt keine kontinuierliche Entspannung hinter den jeweiligen Drosselorganen. Dies zumal deshalb nicht, weil die Drosselorgane einen geringeren Querschnitt aufweisen als die Entlastungsstrecken und unmittelbar hinter den Drosselorganen ein unmittelbarer Übergang zum Durchmesser der Entlastungsstrecken erfolgt.

Zum Beispiel findet eine solche Anlage und ein solches Verfahren auch Anwendung in Kohlekraftwerken und in diesen wiederum in einer KUV-Anlage (KUV = Kohleumwandlungsverfahren). Bei einer unter Hochdruck durchgeführten Kohleteilvergasung fällt als Feinstaub vorliegender Koks, sogenannter Feinkoks, an, der über ein Schleussystem auf atmosphärischen Umgebungsdruck entspannt werden muß, um dann zur weiteren Verwendung in einem Vorratsbehälter gesammelt zu werden.

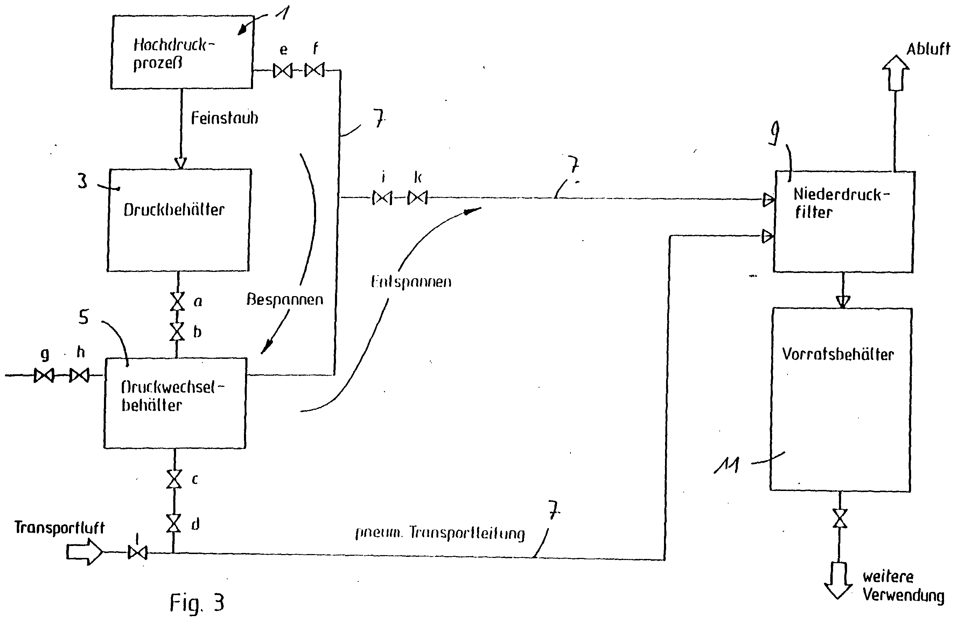

In Fig. 3 wird an einem Prinzipschaltbild ein Schleussystem in eine KUV-Anlage erläutert. In einem Hochdruckteil 1 läuft ein Hochdruckprozeß ab, bei dem Feinstaub anfällt. Eine Ausschleusungseinrichtung umfaßt einen Druckbehälter 3, einen Druckwechselbehälter 5, mehrere Armaturen a/b, c/d, e/f, g/h, i/k und 1 sowie ein Leitungssystem 7, das die einzelnen Bauelemente des Hochdruckteils der Anlage untereinander und mit einem Niederdruckteil der Anlage, insbesondere mit einem Niederdruckfilter 9 und einem Vorratsbehälter 11, verbindet.

Der in einem Hochdruckprozeß anfallende Feinstaub wird in dem Druckbehälter 3 gesammelt, solange bis dieser einen bestimmten Füllstand erreicht. Der in dem Druckbehälter 3 gesammelte und unter Hochdruck stehende Feinstaub muß nun in den unter Niederdruck stehenden Vorratsbehälter 11 ausgeschleust werden. Dazu wird der dem Druckbehälter 3 nachgeschaltete Druckwechselbehälter 5 zunächst auf den gleichen Druck gebracht, der in dem Druckbehälter 3 vorliegt. Dies geschieht dadurch, daß die Armaturen a/b, c/d, i/k und g/h geschlossen und die Armatur e/f geöffnet werden. Durch die Öffnung der Armatur e/f gelangt der Druckwechselbehälter 5 unter den Hochdruckeinfluß des gerade laufenden Hochdruckprozesses. Sobald der Druckwechselbehälter 5 bespannt worden ist, werden die Armaturen a/b geöffnet und der Feinstaub aus dem Druckbehälter 3 in den Druckwechselbehälter 5 entleert. Das aus dem Druckwechselbehälter 5 verdrängte Gasvolumen kann über die noch geöffneten Armaturen e/f entweichen.

Wenn der Druckbehälter 3 entleert ist, werden die Armaturen a/b und e/f geschlossen und die Armaturen i/k geöffnet. Durch das Öffnen der Armaturen i/k wird der Druckwechselbehälter 5 auf den im Niederdruckfilter 9 herrschenden niedrigen Druck (z. B. atmosphärischen Druck) entspannt. Sobald der Druckwechselbehälter 5 vollständig entspannt ist, werden die Armaturen i/k geschlossen und die Armaturen g/h und c/d geöffnet. Durch die Öffnung der Armaturen c/d gelangt der Feinstaub aus dem Druckwechselbehälter 5 in eine pneumatische Transportleitung des Leitungssystems 7, die in dem Niederdruckfilter 9 endet. Damit der Feinstaub über die pneumatische Transportleitung in das Niederdruckfilter 9 gelangen kann, wird gleichzeitig mit der Öffnung der Armaturen c/d auch die Armatur 1 geöffnet, so daß ein Transportfluid, insbesondere Transportluft oder ein Transportgas aus dem Prozeß, aufgeschaltet wird und den Feinstaub pneumatisch zum Niederdruckfilter 9 transportiert. Die Öffnung der Armaturen g/h bewirkt, daß das Gasvolumen in den Druckwechselbehälter 5 nachgespeist wird, das der aus dem Druckwechselbehälter 5 auslaufende Feinstaub eingenommen hat. In dem Niederdruckfilter 9 wird der Feinstaub von dem Transportfluid getrennt und dem Vorratsbehälter 11 zugeführt. Diesem wird der Feinstaub zur weiteren Verwendung entnommen.

Wenn der Druckwechselbehälter 5 entleert ist, werden die Armaturen c/d, g/h und 1 wieder geschlossen, um einen neuen Ausschleusungszyklus einzuleiten.

In einer Anlage bzw. einem Verfahren des oben genannten Standes der Technik wird der Durchsatz an Feinstaub durch den diskontinuierlichen Vorgang des Bespannens und Entspannens, der damit verbundenen Be- und Entspannungszeiten des Druckwechselbehälters 5 und der bei wirtschaftlich vertretbarer Auslegung begrenzten Behältergröße des Druckbehälters 3 bestimmt.

Aufgabe der vorliegenden Erfindung ist daher, eine Anlage zur Ausschleusung von Feinstäuben oder dgl. zu schaffen, mit der der Durchsatz an auszuschleusendem Feinstaub unabhängig von der Größe eines Druckbehälters weitestgehend verwirbelungsfrei deutlich erhöht werden kann.

Die Aufgabe wird durch die kennzeichnenden Merkmale des Anspruchs 1 gelöst.

Der wesentliche Vorteil der erfindungsgemäßen Anlage liegt darin, daß eine direkte, kontinuierliche Entsorgung des während eines Hochdruckprozesses anfallenden Feinstaubes, unabhängig von der Menge des auszuschleusenden Feinstaubes möglich ist. Es entfallen alle Faktoren, die in einer Anlage des Standes der Technik zu einer Begrenzung der auszuschleusenden Feinstaubmenge geführt haben. So fallen der Druckbehälter 3 und der Druckwechselbehälter 5 sowie die Armaturen e/f, g/h, i/k und 1 sowie der entsprechende Teil des Leitungssystems 7 ersatzlos weg. Darüber hinaus wird die Strömung durch den sich an die Durchgangsöffnung anschließenden Diffusorbereich kontrolliert geführt und der Druck kontrolliert abgebaut und somit vermieden, daß die Strömung nach Durchtritt durch die Durchgangsöffnung verwirbelt.

Neben dem dadurch bewirkten höheren Durchsatz, liegt ein weiterer Vorteil darin, daß die Betriebskosten der Anlage deutlich niedriger sind als die in einer Anlage des Standes der Technik. Nicht nur der Bau der Anlage wird günstiger, sondern auch die Wartungskosten werden erheblich gesenkt, nicht zuletzt deshalb, weil die erfindungsgemäße Anlage aufgrund ihrer einfachen aber wirkungsvollen Strukturierung weniger störanfällig ist.

Es ist von Vorteil, daß die Transportluft oder das Transportgas nicht erst aufgeschaltet wird, nachdem der Feinstaub entspannt worden ist, sondern bereits im Hochdruckteil der Anlage dem durch die Ausschleusungseinrichtung zu transportierenden Feinstaub aufgeschaltet wird, so daß dieser auf seinem ganzen Weg vom Hochdruckteil zum Niederdruckteil der Anlage pneumatisch transportiert wird. Dadurch wird ein separates Transportluft- oder Gaszuleitungssystem eingespart.

Der Einbau einer Absperrarmatur hat den Vorteil, daß die kontinuierliche Ausschleusung bedarfsweise unterbrochen werden kann.

Weitere Vorteile der vorliegenden Erfindung ergeben sich aus den Merkmalen der Ansprüche 5 bis 8.

Eine Ausführungsform der vorliegenden Erfindung wird im folgenden anhand der Zeichnungen näher beschrieben. Es zeigen:
Fig. 1 ein Prinzipschaltbild der Anlage zur Ausschleusung von Feinstäuben oder dgl. gemäß vorliegender Erfindung;
Fig. 2 einen Längsschnitt durch ein Steuerelement einer Ausschleusungseinrichtung der Anlage gemäß Fig. 1;
Fig. 3 ein Prinzipschaltbild einer Anlage zur Ausschleusung von Feinstäuben oder dgl. des Standes der Technik.

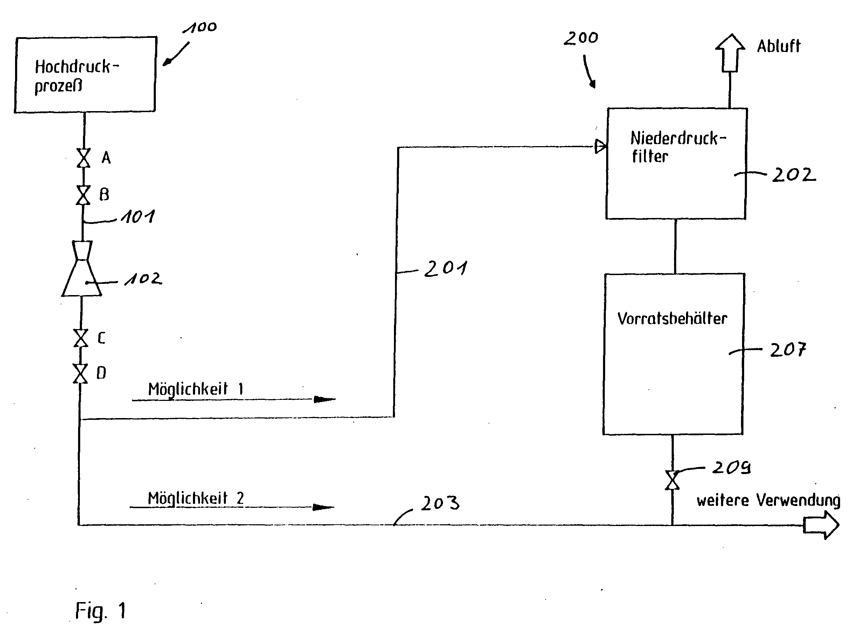

Fig. 1 zeigt ein Prinzipschaltbild einer erfindungsgemäßen Anlage zur Auschleusung von Feinstäuben oder dgl. In einem Hochdruckteil 100 einer Anlage fallen während des Hochdruckprozesses Feinstäube an, die an den Niederdruckteil 200 der Anlage abgeführt werden müssen, um dort einer weiteren Verwendung zur Verfügung stehen zu können.

Der Hochdruckteil 100 steht über eine Leitung 101 mit einer Ausschleusungseinrichtung in Wirkverbindung, die die Armaturen A/B und C/D sowie ein Steuerelement 102 umfaßt. Die Armaturen A/B sitzen in der Leitung 101 in Schleusrichtung vor dem Steuerelement 102 und die Armaturen C/D sitzen in der Leitung 101 in Schleusrichtung hinter dem Steuerelement 102. Bei Öffnung der Armaturen A/B und C/D beginnt ein Ausschleusungsvorgang.

Mit den Armaturen A/B und C/D in Öffnungsstellung (nicht dargestellt) wird der Feinstaub dem Hochdruckteil 100, bzw. dem Hochdruckprozeß, direkt entnommen. Gleichzeitig wird noch im Hochdruckteil 100 dem auszuschleusenden Feinstaub ein Transportfluid, entweder die normale Umgebungsluft oder ein anderes Transportgas, z. B. aus dem Prozeß, aufgeschaltet. Das dem Hochdruckteil 100 entnommene Gas/Feststoffgemisch wird pneumatisch auf seinem Transportweg durch die Leitung 101, an den geöffneten Armaturen A/B vorbei, durch das Steuerelement 102 hindurchgeführt.

Bei der Hindurchführung des Gas-/Feststoffgemisches durch das Steuerelement 102 wird dieses Gemisch entspannt, das heißt, auf den im Niederdruckteil 200 der Anlage herrschenden Niederdruck gebracht. Wahlweise besteht dann die Möglichkeit, das entspannte Gas-/Feststoffgemisch über ein Leitungssystem 201 zu einem Niederdruckfilter 202 zu transportieren oder über ein Leitungssystem 203 direkt zur weiteren Verwendung abzuleiten. Der über das Leitungssystem 201 in das Niederdruckfilter 202 gelangte Feinstaub wird dort von dem Transportfluid getrennt und über eine Leitung 205 in einen Vorratsbehälter 207 abgeführt. Der in dem Vorratsbehälter 207 gesammelte Feinstaub kann bedarfsweise über ein Ventil 209 zur weiteren Verwendung entnommen werden.

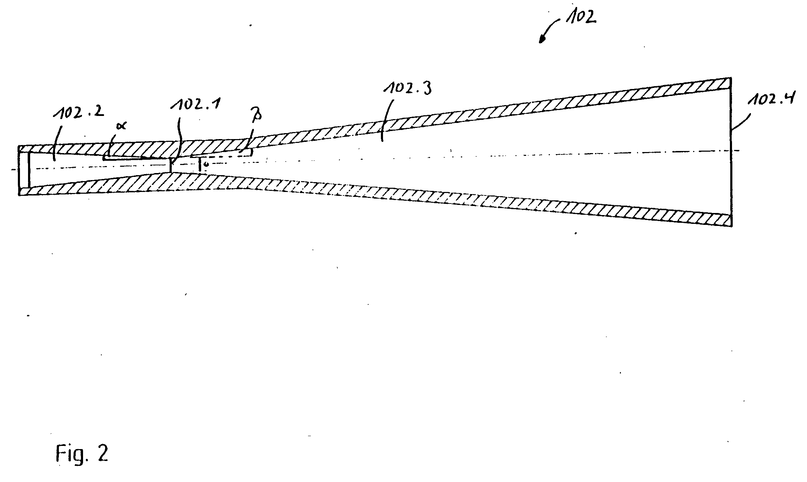

In Fig. 2 ist das Steuerelement 102 im Längsschnitt dargestellt. Das Steuerelement 102 ist vorzugsweise eine keramische Entspannungsdüse, wie z. B. eine Lavaldüse, mit einer Durchgangsöffnung 102.1. Der Strömungsquerschnitt der Durchgangsöffnung 102.1 ist so berechnet, daß der gesamte, in einem Hochdruckprozeß anfallende Feinstaub zusammen mit der erforderlichen Menge Transportfluid aus dem Prozeß abgeführt werden kann. Vor der Durchgangsöffnung 102.1 ist ein Eintrittsbereich 102.2 ausgebildet, dessen Strömungsquerschnitt sich mit einem Eintrittswinkel α von ca. 5° nach innen bis zur Durchgangsöffnung 102.1 mit dem engsten Querschnitt (Q, Doppelpfeil in der Darstellung) verjüngt. Hinter der Durchgangsöffnung 102.1 ist ein Diffusorbereich 102.3 ausgebildet, dessen Strömungsquerschnitt sich mit einem Austrittswinkel β von ca. 5° von innen nach außen bis zu einer Austrittsöffnung 102.4 ausdehnt. Der Diffusorbereich 102.1 kann auch aus einem nichtkeramischen Material, wie z. B. Edelstahl gefertigt sein.

Durch den Austrittswinkel β der Düse von ca. 5° wird verhindert, daß der Feinstaub bei der Entspannung verwirbelt. Eine Verwirbelung des Feinstaubes würde zu einer Abtragung des Düsenmaterials im Diffusorbereich 102.3 führen. Die Länge des Diffusorbereichs 102.3, das heißt, der horizontale Abstand zwischen der Durchgangsöffnung 102.1 mit dem engsten Querschnitt Q und der Austrittsöffnung 102.4 am Ende des Diffusorbereichs 102.3 ist so gewählt, daß das Gas-/Feststoffgemisch an der Austrittsöffnung 102.4 gerade die für den pneumatischen Weitertransport erforderliche Strömungsgeschwindigkeit erreicht.

Für unterschiedliche Feinstäube und unterschiedliche Transportfluide können unterschiedliche Ausführungsformen des Steuerelements 102 eingesetzt werden. Zudem können Steuerelemente 102 an unterschiedliche Prozeßbedingungen angepaßt werden. Die dazu erforderlichen Berechnungsgrundlagen sind dem Fachmann an sich bekannt.

## Patentansprüche

1. Anlage zur Ausschleusung von Feinstäuben oder dgl. mit einem unter Hochdruck arbeitenden Hochdruckteil (100) und einem unter Niederdruck arbeitenden Niederdruckteil (200), wobei die Feinstäube im Hochdruckteil (100) in einem unter Hochdruck strömenden Fördergas transportiert werden und in dem Transportweg der Feinstäube zwischen dem Hochdruckteil (100) und dem Niederdruckteil (200) eine Ausschleusungseinrichtung (102, A/B, C/D) zum Entspannen und Ausschleusen des aus dem Hochdruckteil (100) zugeführten Feinstaubes angeordnet ist und die Ausschleusungseinrichtung (102, A/B, C/D) ein Steuerelement (102) mit einer den Transportweg in seinem Strömungsquerschnitt verengenden Durchgangsöffnung (102.1) aufweist,
**dadurch gekennzeichnet,**
daß das Steuerelement (102) über eine Leitung (101) direkt mit dem Hochdruckteil (100) verbunden ist und in Strömungsrichtung unmittelbar hinter der Durchgangsöffnung (102.1) einen sich unter einem Neigungswinkel von etwa 5° erweiternden Diffusorbereich (102.3) zur kontinuierlichen Entspannung des durch die Durchgangsöffnung (102.1) strömenden Feinstaubes aufweist.

2. Anlage nach Anspruch 1,
**dadurch gekennzeichnet**,
daß die Ausschleusungseinrichtung (102, A/B, C/D) eine Absperrvorrichtung (A/B, C/D) für den Transportweg umfaßt.

3. Anlage nach Anspruch 2,
**dadurch gekennzeichnet,**
daß die Absperrvorrichtung (A/B, C/D) eine Absperrarmatur (A/B) aufweist, die zwischen dem Hochdruckteil (100) und dem Steuerelement (102) angeordnet ist.

4. Anlage nach Anspruch 2 oder 3,
**dadurch gekennzeichnet,**
daß die Absperrvorrichtung (A/B,C/D)eine Absperrarmatur (C/D) aufweist, die zwischen dem Steuerelement (102) und dem Niederdruckteil (200) angeordnet ist.

5. Anlage nach einem der vorstehenden Ansprüche,
**dadurch gekennzeichnet,**
daß das Steuerelement (102) vor der Durchgangsöffnung 102.1) einen Eintrittsbereich (102.2) mit einem Neigungswinkel α von ca. 5° aufweist.

6. Anlage nach einem der vorstehenden Ansprüche,
**dadurch gekennzeichnet,**
daß das Steuerelement (102) keramisch ausgebildet ist.

7. Anlage nach einem der Ansprüche 1 bis 5,
**dadurch gekennzeichnet,**
daß das Transportfluid Luft ist.

8. Anlage nach einem der Ansprüche 1 bis 5,
**dadurch gekennzeichnet,**
daß das Transportfluid ein aus dem Hochdruckteil (100) abgezweigtes Prozeßgas ist.

## Claims

1. An installation for removing fine dust or the like, having a high-pressure part (100) that operates under high pressure and a low-pressure part (200) that operates under low pressure, where the fine dust in the high-pressure part (100) is transported in a carrier gas which flows at a high pressure, and a discharge device (102, A/B, C/D) for depressurizing and discharging the fine dust supplied from the high-pressure part (100) is arranged in the delivery path of the fine dust between the high-pressure part (100) and the low-pressure part (200), and said discharge device (102, A/B, C/D) has a control element (102) with an open passage (102.1) which constricts the cross section of flow of the transport pathway,
characterized in that
the control element (102) is connected by a line (101) directly to the high-pressure part (100) and has a diffusor area (102.3) widening at an angle of inclination of approximately five degrees directly downstream from the open passage (102.1) in the direction of flow for a continuous depressurization of the fine dust flowing through said open passage (102.1).

2. The installation according to Claim 1,
characterized in that
the discharge device (102, A/B, C/D) includes a cutoff device (A/B, C/D) for the delivery pathway.

3. The installation according to Claim 2,
characterized in that
the cutoff device (A/B, C/D) has a cutoff fitting (A/B) arranged between the high-pressure part (100) and the control element (102).

4. The installation according to Claim 2 or 3,
characterized in that
the cutoff device (A/B, C/D) has a cutoff fitting (C/D) arranged between the control element (102) and the low-pressure part (200).

5. The installation according to one of the preceding claims,
characterized in that
the control element (102) has an inlet area (102.2) with an angle of inclination α of approximately five degrees upstream from the open passage (102.1).

6. The installation according to one of the preceding claims,
characterized in that
the control element (102) is made of a ceramic.

7. The installation according to one of Claims 1 through 5,
characterized in that
the transport fluid is air.

8. The installation according to one of Claims 1 through 5,
characterized in that
the transport fluid is a process gas diverted from the high-pressure part (100).

## Revendications

1. Installation pour évacuation de fines poussières ou similaires par éclusage, comprenant une partie haute pression (100) fonctionnant sous haute pression, et une partie basse pression (200) fonctionnant sous basse pression, les fines poussières étant transportées dans un gaz de transport s'écoulant sous haute pression, et un dispositif d'évacuation par éclusage (102, A/B, C/D) pour la détente des fines poussières acheminées depuis la partie haute pression (100) et leur évacuation par éclusage étant disposé sur le parcours de transport des fines poussières entre la partie haute pression (100) et la partie basse pression (200), et le dispositif d'évacuation par éclusage (102, A/B, C/D) présentant un élément de réglage (102) avec un orifice de passage (102.1) rétrécissant le parcours de transport dans sa section d'écoulement transversale, caractérisée en ce que l'élément de réglage (102) est en communication directe avec la partie haute pression (100), via une conduite (101), et présente, dans le sens de l'écoulement, directement derrière l'orifice de passage (102.1), une zone de diffusion (102.3) s'élargissant en décrivant un angle d'inclinaison d'environ 5°, en vue de la détente continue des fines poussières s'écoulant au travers de l'orifice de passage (102.1).

2. Installation selon la revendication 1, caractérisée en ce que le dispositif d'évacuation par éclusage (102, A/B, C/D) présente un dispositif d'arrêt (A/B, C/D) pour le parcours de transport.

3. Installation selon la revendication 2, caractérisée en ce que le dispositif d'arrêt (A/B, C/D) présente un appareil de sectionnement (A/B) disposé entre la partie haute pression (100) et l'élément de réglage (102).

4. Installation selon la revendication 2 ou 3, caractérisée en ce que le dispositif d'arrêt (A/B, C/D) présente un appareil de sectionnement (C/D), qui est disposé entre l'élément de réglage (102) et la partie basse pression (200).

5. Installation selon l'une des revendications qui précèdent, caractérisée en ce que l'élément de réglage (102) présente, devant l'orifice de passage (102.1), une zone d'entrée (102.2) avec un angle d'inclinaison α d'environ 5°.

6. Installation selon l'une des revendications qui précèdent, caractérisée en ce que l'élément de réglage (102) est en céramique.

7. Installation selon l'une des revendications 1 à 5, caractérisée en ce que le fluide de transport est de l'air.

8. Installation selon l'une des revendications 1 à 5, caractérisée en ce que le fluide de transport est un gaz industriel dérivé de la partie basse pression (100).
